# EUROPEAN PATENT SPECIFICATION

(11) **EP 2 738 551 B1**
(45) Date of publication and mention of the grant of the patent: **18.03.2015**
(21) Application number: 12195328.5
(22) Date of filing: 03.12.2012
(51) Int. Cl.: G01N 27/327

(54) **Biosensor module comprising a biocompatible electrode**
Biosensormodul mit einer biokompatiblen Elektrode
Module de biocapteur comprenant une électrode biocompatible

(43) Date of publication of application: 04.06.2014
(73) Proprietor: NXP B.V., 5656 AG Eindhoven (NL)
(72) Inventor: Daamen, Roel, 5656 AG Eindhoven (NL); Nguyen, Viet Hoang, 5656 AG Eindhoven (NL)
(74) Representative: Hardingham, Christopher Mark

(56) References cited:
- EP-A1- 2 492 675
- WO-A1-2010/049881

## Description

### FIELD OF THE INVENTION

The present invention relates to the field of biosensors, more specifically to the field of manufacturing biosensors comprising one or more biocompatible electrodes for interacting with a biologic fluid sample.

### BACKGROUND

Attempts have been made to manufacture biosensor modules with very small biocompatible electrodes (diameter below 150 nm) formed from a noble metal (such as gold (Au)) on top of substrate trenches filled with an electrically conducting material, such as copper (Cu) or aluminum (Al). One such attempt involves forming the biocompatible electrodes together with bond pads by applying a copper CMP (chemical-mechanical planarization) step combined with a copper etch back step followed by gold deposition and a gold CMP (chemical-mechanical planarization) step.

However, due to the significant different in size between the small electrodes and the bond pads as well as several other factors, it is very hard to avoid a partial exposure of the copper of the bond pad during the CMP (dishing). Such exposure of the Cu to the chemical substances (slurries) used in the CMP process may cause immediate corrosion of the bond pad. Furthermore, use of a biosensor module with partially exposed copper in analysis of a biological sample may cause further corrosion and pollution of the sample.

There may be a need for an improved biosensor module with increased durability and reduced risk of sample pollution. Further, there may be a need for a method of manufacturing such an improved biosensor module.

European Patent application, publication no. EP2492675 A1 discloses a biosensor chip and a method of manufacturing the same, in which a bond pad and detector electrode are formed of different materials (one is formed of a connection layer such as copper and the other is formed of a diffusion barrier layer such as tantalum or tantalum nitride).

International patent application publication number WO2010/049881 A1 discloses biocompatible electrodes, which are manufactured by depositing filling metal and etching back the filling metal to the surface of a surrounding insulator, forming a recess, and then depositing an electrode metal which is etched back to fill the recess and form biocompatible electrodes.

### SUMMARY OF THE INVENTION

According to the invention, there is provided a method of manufacturing a module for a biosensor. The described method comprises (a) providing a substrate, the substrate comprising a trench and a bond pad, wherein the trench is filled with an electrically conductive material and the bond pad is arranged within the substrate, (b) removing a part of the electrically conductive material from the trench such that a recess is formed in a surface of the substrate, (c) forming a biocompatible electrode in the recess, and (d) removing a part of the substrate such that the bond pad is accessible through the surface of the substrate.

This aspect is based on the idea that the biocompatible electrode is formed on top of the electrically conductive material in the recess before a part of the substrate is removed to provide access to the bond pad within the substrate. Thereby, the bond pad is not exposed to the process of forming the biocompatible electrodes. Thus, the risk that corrosion of the bond pad will occur during manufacture is significantly reduced.

In the present context, the term "substrate" may particularly denote a dielectric material, such as silicon oxide or aluminum oxide, which besides the electrode and the bond pad may support or hold various semiconductor components and integrated circuits designed to provide electronic functions relating to a biosensor.

In the present context, the term "trench" may particularly denote an elongate cut-out or cavity in a surface of the substrate.

In the present context, the term "bond pad" may particularly denote a body of electrically conductive material arranged to provide electrical contact between components of the substrate and other devices.

In the present context, the term "the bond pad is arranged within the substrate" may particularly denote a state where the bond pad is enclosed by the substrate such that the bond pad is not accessible from outside the substrate.

In the present context, the term "biocompatible electrode" may particularly denote an electrode made from a material which does not have a toxic or injurious effect on a biological substance, such as a biological sample to be analyzed. In other words, the biocompatible electrode will not react with the biological substance in such a way that unwanted reaction products are released to the biological substance, e.g. in the case of corrosion.

In the manufacturing method according to the invention, the first step resides in providing a substrate having a trench and a bond pad. The trench is filled with electrically conductive material such that the outer surface of the electrically conductive material is substantially coinciding with the surface of the substrate, i.e. the trench is substantially filled completely with electrically conductive material. The bond pad, which is also electrically conductive, is provided within the substrate, i.e. it is embedded in the substrate in such a way that it is at least covered by the surface of the substrate.

As a second step, a part of the electrically conductive material within the trench is removed in such a way that a recess is formed in the surface of the substrate. In other words, if it for purposes of illustration is assumed that the substrate is oriented such that the trench is provided in the upper surface of the substrate, this means that the electrically conductive material is removed from an upper portion of the trench.

As a third step, a biocompatible electrode is formed in the recess. More specifically, a biocompatible electrode material, i.e. a material that is both biocompatible and electrically conducting, is filled into the recess. The electrode may be formed such that it extends somewhat above the substrate surface, or such that its surface substantially coincides with the plane of the substrate surface, or such that its surface is slightly below the plane of the substrate surface. In the latter case, a part of the recess will remain after the electrode has been formed.

Finally, as a fourth step, a part of the substrate is removed in order to make the bond pad accessible through the resulting opening in the substrate. This step may preferably be formed by applying a dry etch process suitable for etching through the substrate material in a controllable manner.

Summarizing the above, it is noted that the manufacturing process may be considered as being divided into two main steps. The first main step serves to form the biocompatible electrode, and the second main step serves to provide a connection to the bond pad within the substrate. During the first main step, bond pad is embedded in the substrate such that it is not influenced by the forming of the biocompatible electrode. The final module can then be included in a biosensor e.g. by a packaging process which may include connecting a bond wire to the bond pad.

The manufacturing process according to the invention assures that the bond pad is not exposed to the processes involved in forming the biocompatible electrode. Thereby, corrosion of the bond pad during manufacture is prevented. Furthermore, the risk of corrosion of the bond pad during use of the manufactured module is reduced.

According to an embodiment, the step of removing a part of the electrically conductive material comprises an etching process and/or a chemical-mechanical planarization process.

The etching process is preferably designed to etch a controllable amount of the electrically conductive material in the trench without significantly influencing the substrate.

According to a further embodiment, the step of forming a biocompatible electrode comprises (a) depositing an electrode material on the surface of the substrate in which surface the recess is formed, and (b) applying a chemical-mechanical planarization process to form the biocompatible electrode and to remove excessive electrode material from the surface of the substrate.

By depositing the electrode material on the surface of the substrate, the recess is filled with the electrode material such that the electrode material is in contact with the remaining electrically conductive material in the trench. By applying a chemical-mechanical planarization process, the electrode material is removed from the surface of the substrate while leaving a sufficient amount of the electrode material in the recess, such that the biocompatible electrode is formed. The specific chemical-mechanical planarization process is selected in dependence of the electrode material.

According to a further embodiment, the biocompatible material comprises a noble metal, such as e.g. gold (Au) or platinum (Pt). The noble metal can be handled and processed by known processes and tools, and are non-toxic to biological material.

According to a further embodiment, the bond pad comprises a material selected from the group consisting of aluminum and copper. Furthermore, the electrically conductive material is selected from the group consisting of aluminum and copper.

Both aluminum (Al) and copper (Cu) have excellent electrical conductivity properties. Furthermore, they can be handled and processed by known processes and tools.

According to a further embodiment, the substrate comprises a further trench filled with the electrically conductive material, a part of the electrically conductive material is removed from the further trench such that a further recess is formed in the surface of the substrate, and a further biocompatible electrode is formed in the further recess.

In the present embodiment, the further biocompatible electrode is formed in the surface of the substrate in the same manner as the electrode is formed in the first aspect and the above described embodiments.

Thereby, two adjacent biocompatible electrodes are formed at essentially the same time. By having two electrodes, it becomes possible to measure desired properties at two positions within a biological sample. It is noted that more electrodes may be provided in a similar manner. Thereby, a variety of sensor structures can be obtained, such as a linear structure, i.e. a row of adjacent electrodes, a matrix structure, i.e. a plurality of parallel rows of electrodes, or any other desirable electrode pattern structure.

Also disclosed herein, is a module for a biosensor. The described module comprises (a) a substrate comprising (i) a trench, (ii) a bond pad, and (iii) a cut-out portion, and (b) a biocompatible electrode. Further, the trench contains an electrically conductive material in a lower portion of the trench, the biocompatible electrode is formed in an upper portion of the trench and is in contact with the electrically conductive material in the lower portion of the trench, and the bond pad is arranged within the substrate and is accessible through the cut-out portion.

The module is preferably manufactured by means of the method according to the first aspect or any of the above embodiments. Accordingly, the module has the advantage that the bond pad has not been exposed to the processes involved in forming the biocompatible electrode. Thus, the risk that the bond pad is corroded is minimal.

In the present context, the term "upper portion" may particularly denote a portion of the trench which is closer to the surface of the substrate. Similarly, the term "lower portion" may particularly denote a portion of the trench which is farther away from the surface of the substrate in comparison to the "upper portion".

In the present context, the term "accessible" may in particular denote that that a bonding wire may be brought into contact with the bond pad through the cut-out portion.

It is noted that the biocompatible electrode and the bond pad may be electrically connected to suitable electronic components supported by the substrate. Such electronic components may in particular be designed to provide functions suitable for biosensor applications, such as signal amplification, filtering and interfacing.

The disclosed module comprises a further biocompatible electrode, the substrate comprises a further trench which contains electrically conductive material in a lower portion thereof, and the further biocompatible electrode is formed in an upper portion of the further trench and is in contact with the electrically conductive material in the lower portion of the further trench.

By having two electrodes, it becomes possible to measure desired properties at two positions within a biological sample. It is noted that the sensor module may comprise even more electrodes.

The disclosed further biocompatible electrode is arranged adjacent to and electrically isolated from the biocompatible electrode.

By having two adjacent and electrically isolated biocompatible electrodes on the same surface of the substrate, variations in the properties of a biological substance to be measured at spatially nearby positions can be detected. As mentioned above, the module may comprise more than two electrodes which may be arranged in any desired pattern on the substrate surface, including e.g. a linear structure and a matrix structure.

The disclosed biocompatible electrode comprises a noble metal.

Albeit being expensive, noble materials, such as gold and platinum, are known to have excellent biocompatibility.

In the present context, the term "bioreceptor" may particularly denote a material with a certain property in relation to a biological material to be analyzed. For example, the bioreceptor may be a material that attracts certain molecules within a sample of a biological fluid, such as glucose molecules in a blood sample.

The invention will be described in more detail hereinafter with reference to examples of embodiment to which the invention is, however, not limited.

### BRIEF DESCRIPTION OF THE DRAWING

Figures 1A to 1E illustrates the steps of a manufacturing method in accordance with the prior art.
Figures 2A to 2E illustrates the steps of a manufacturing method in accordance with an embodiment.

### DETAILED DESCRIPTION

The illustration in the drawing is schematic. It is noted that in different figures, similar or identical elements are provided with the same reference signs or with reference signs, which differ only within the first digit.

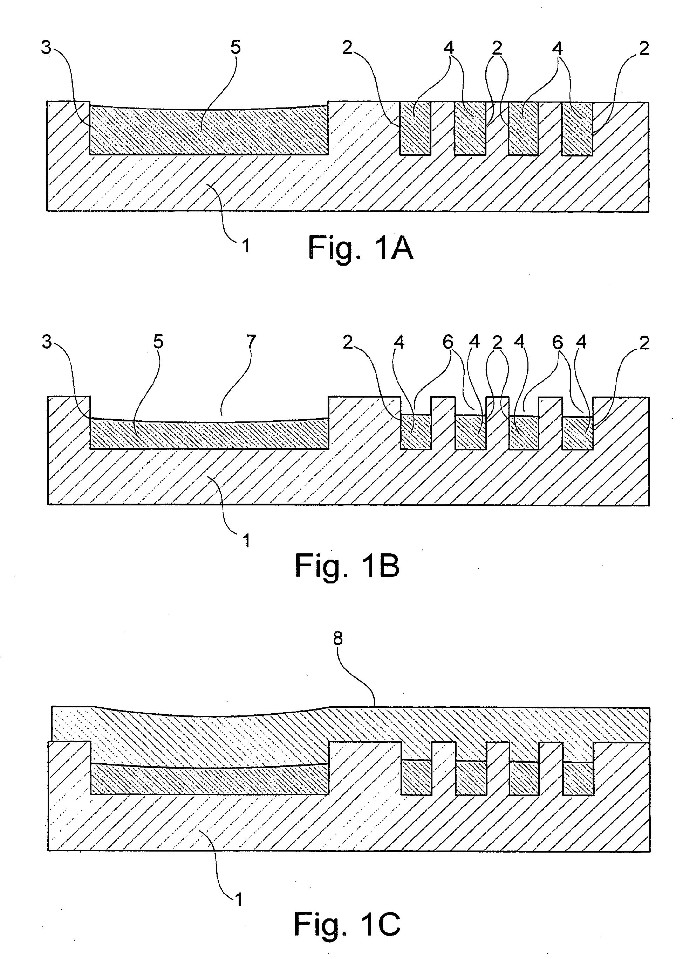

Figures 1A to 1E illustrate the steps of a manufacturing method in accordance with the prior art and some of the problems associated therewith.

More specifically, Figure 1A shows an initial stage of the prior art manufacturing process. A dielectric substrate 1 comprising four narrow trenches 2 and a wide trench 3 is provided. The narrow trenches 2 are filled with copper 4 intended for providing electrical connection between biocompatible electrodes yet to be formed and electrical and electronic components (not shown) supported by the substrate 1. Similarly, the wide trench 3 is filled with copper 5 intended to form a bond pad for connecting to external devices (not shown).

In a first processing step, a part of the copper 4 in the narrow trenches 2 and a part of the copper 5 in the wide trench 3 is removed by means of a copper etch back process. Thereby, as shown in Figure 1B, recesses 6 above the remaining copper 4 in the narrow trenches 2 are formed. Further, as also shown in Figure 1B, a recess 7 is formed above the remaining copper in the wide trench 3.

Then, in a second processing step, a layer 8 of gold is deposited on the structure, resulting in the structure shown in Figure 1C.

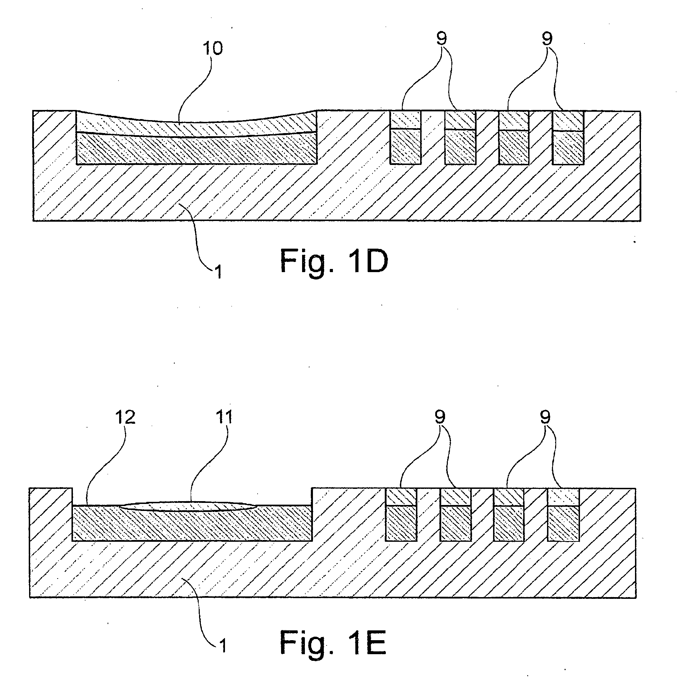

Thereafter, a chemical-mechanical planarization (CMP) process is applied with the aim of obtaining the structure shown in Figure 1D, where gold electrodes 9 are formed in the upper part of the narrow trenches 2 and a bond pad electrode 10 is formed in the upper part of the wide trench 3 while excessive gold is removed from the upper surface of the substrate 1.

However, due to various reasons, such as the difference in size between the narrow trenches 2 and the wide trench 3, the resulting structure may likely differ from the desired structure of Figure 1D.

Figure 1E shows an example of an undesirable structure which is likely to be obtained instead of the one illustrated in Figure 1D. The structure shown in Figure 1E differs from that of Figure 1D in that the deposited gold 8 is completely removed from a part 12 of the copper in the wide trench 3 while another part of the copper is covered by the remaining gold 11. In this structure, the part 12 of the copper is exposed to the chemicals involved in the CMP process and therefore corrodes immediately. This corrosion makes the resulting sensor module unusable.

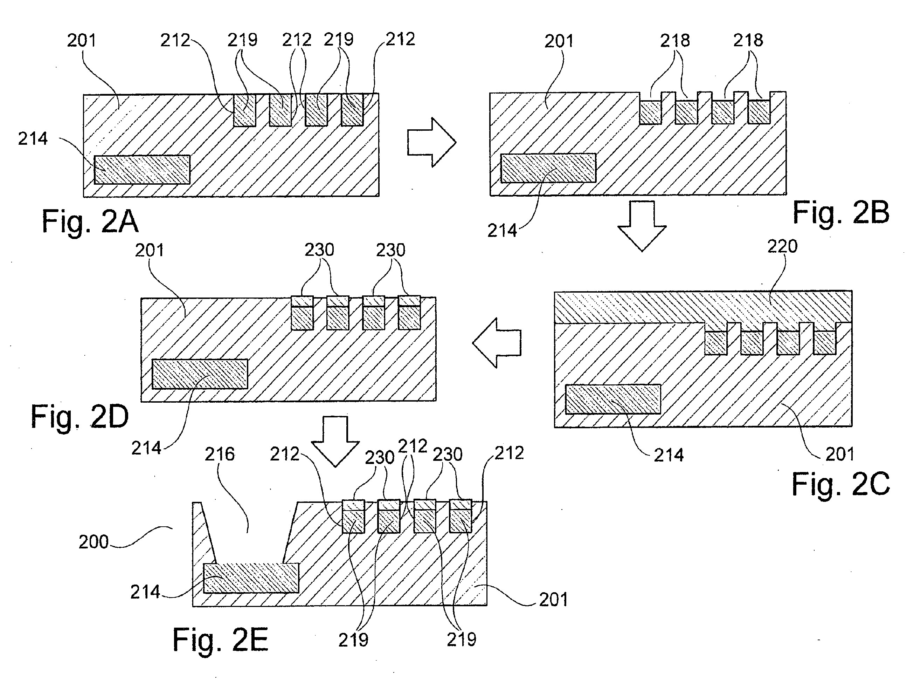

Figures 2A to 2E illustrate the steps of a manufacturing method in accordance with an embodiment of the present invention.

More specifically, Figure 2A shows an initial stage of the manufacturing process according to the present embodiment. A dielectric substrate 201 is provided. The dielectric substrate 201 comprises trenches 212 and a bond pad 214. The trenches 212 are filled with copper 219 (or another suitable conductive material, such as Tungsten (W)) intended for providing electrical connection between biocompatible electrodes yet to be formed and electrical and electronic components (not shown) supported by the substrate 201. The bond pad 214 is provided within the substrate 201 and comprises e.g. Aluminum. Further, as can be seen, the bond pad 214 is arranged below and to the side (left in the drawing) relative to the trenches 212. It should be noted that the drawing shows a cross-section such that the trenches 212 and the bond pad 214 extend in the direction perpendicular to the plane of the drawing.

In a first processing step, a part of the copper 219 in the trenches 212 is removed by means of a copper etch back process. Thereby, as shown in Figure 2B, recesses 218 are formed above the remaining copper in the trenches 212. The copper etch back process is similar to the one applied in the prior art process described above with reference to Figures 1A to 1E. However, as can be seen in Figure 2B, the bond pad 214 is protected by the substrate 201 and therefore not exposed to the etch back process.

Then, in a second processing step, a layer 220 of gold is deposited on top of the structure, resulting in the structure shown in Figure 2C.

Thereafter, a chemical-mechanical planarization (CMP) process is applied to form gold electrodes 230 in the upper part of the trenches 212 on top of the remaining copper 219 as shown in Figure 2D. More specifically, the CMP process forms the electrodes 230 and removes excess gold from the surface of the substrate 201 such that the electrodes are electrically isolated from each other. It is noted that in contrast to the prior art process shown in Figures 1A to 1E and described above, the bond pad 214 is not exposed to the CMP process. Accordingly, the electrodes 230 are formed without the risk of causing corrosion in the bond pad 214.

However, due to various reasons, such as the difference in size between the narrow trenches 2 and the wide trench 3, the resulting structure may likely differ from the desired structure of Figure 1D.

Finally, the process is finished by etching down through the substrate 201 from above the bond pad 214 such that an opening 216 is formed in the substrate 201 which allows access to the bond pad 214, e.g. in order to connect a bonding wire (not shown). The resulting biosensor module is shown in Figure 2E.

It is noted that, unless otherwise indicated, the use of terms such as "upper", "lower", "left", and "right" refers solely to the orientation of the corresponding drawing.

It should be noted that the term "comprising" does not exclude other elements or steps and that the use of the articles "a" or "an" does not exclude a plurality. Also elements described in association with different embodiments may be combined. It should also be noted that reference signs in the claims should not be construed as limiting the scope of the claims.

## Claims

1. A method of manufacturing a module (200) for a biosensor, the method comprising
providing a substrate (201), the substrate (201) comprising a trench (212) and a bond pad (214), wherein the trench (212) is filled with an electrically conductive material (219) and the bond pad (214) is arranged within the substrate (201),
removing a part of the electrically conductive material (219) from the trench (212) such that a recess (218) is formed in a surface of the substrate (201),
forming a biocompatible electrode (230) in the recess (218), and
removing a part of the substrate (201) such that the bond pad (214) is accessible through the surface of the substrate (201).

2. The method according to the preceding claim, wherein the step of removing a part of the electrically conductive material (219) comprises an etching process and/or a chemical-mechanical planarization process.

3. The method according to any of the preceding claims, wherein the step of forming a biocompatible electrode (230) comprises
depositing an electrode material (220) on the surface of the substrate (201) in which the recess (218) is formed, and
applying a chemical-mechanical planarization process to form the biocompatible electrode (230) and to remove excessive electrode material (220) from the surface of the substrate (201).

4. The method according to the preceding claim, wherein the biocompatible material (220) comprises a noble metal.

5. The method according to any of the preceding claims, wherein the bond pad (214) comprises a material selected from the group consisting of aluminum and copper, and wherein the electrically conductive material (219) is selected from the group consisting of aluminum and copper.

6. The method according to any of the preceding claims, wherein
the substrate (201) comprises a further trench (212) filled with the electrically conductive material (219),
a part of the electrically conductive material (219) is removed from the further trench (212) such that a further recess (218) is formed in the surface of the substrate (201), and
a further biocompatible electrode (230) is formed in the further recess.

## Patentansprüche

1. Verfahren zum Herstellen eines Moduls (200) für einen Biosensor, wobei das Verfahren aufweist
Bereitstellen eines Substrats (201), wobei das Substrat einen Graben (212) und ein Bondpad (214) aufweist, wobei der Graben (212) mit einem elektrisch leitenden Material (219) gefüllt wird und das Bondpad (214) innerhalb des Substrats (201) angeordnet wird,
Entfernen eines Teils des elektrisch leitenden Materials (219) von dem Graben (212), so dass eine Vertiefung (218) in einer Oberfläche des Substrats (201) gebildet wird,
Bilden einer biokompatiblen Elektrode (230) in der Vertiefung (218), und
Entfernen eines Teils des Substrats (201), so dass das Bondpad (214) durch die Oberfläche des Substrats (201) zugänglich ist.

2. Verfahren gemäß dem vorangehenden Anspruch, wobei der Schritt des Entfernens eines Teils des elektrisch leitenden Materials (219) einen Ätzprozess und/oder einen chemisch mechanischen Planarisierungsprozess aufweist.

3. Verfahren gemäß einem der vorangehenden Ansprüche, wobei der Schritt des Bildens einer biokompatiblen Elektrode (230), aufweist
Abscheiden eines Elektrodenmaterials (220) auf der Oberfläche des Substrats (201), in der die Vertiefung (218) gebildet ist, und
Anwenden eines chemisch mechanischen Planarisierungsprozesses, um die biokompatible Elektrode (230) zu bilden und um überschüssiges Elektrodenmatelial (220) von der Oberfläche des Substrats (201) zu entfernen.

4. Verfahren gemäß dem vorangehenden Anspruch, wobei das biokompatible Material (220) ein Edelmetall aufweist.

5. Verfahren gemäß einem der vorangehenden Ansprüche, wobei das Bondpad (214) ein Material aufweist, welches aus der Gruppe bestehend aus Aluminium und Kupfer ausgewählt wird, und wobei das elektrisch leitende Material (219) aus der Gruppe bestehend aus Aluminium und Kupfer ausgewählt wird.

6. Verfahren gemäß einem der vorangehenden Ansprüche, wobei
das Substrat (201) einen weiteren Graben (212) aufweist, welcher mit dem elektrisch leitenden Material (219) gefüllt wird,
ein Teil des elektrisch leitenden Materials (219) von dem weiteren Graben (212) entfernt wird, so dass eine weitere Vertiefung (218) in der Oberfläche des Substrats (201) gebildet wird, und
eine weitere biokompatible Elektrode (230) in der weiteren Vertiefung gebildet wird.

## Revendications

1. Procédé de fabrication d'un module (200) pour un biocapteur, le procédé comprenant
l'obtention d'un substrat (201), le substrat (201) comprenant une tranchée (212) et un plot de connexion (214), la tranchée (212) étant remplie avec un matériau électriquement conducteur (219) et le plot de connexion (214) étant disposé à l'intérieur du substrat (201),
le retrait d'une partie du matériau électriquement conducteur (219) de la tranchée (212) de telle sorte qu'une encoche (218) est formée dans une surface du substrat (201),
la formation d'une électrode biocompatible (230) dans l'encoche (218), et
le retrait d'une partie du substrat (201) de telle sorte que le plot de connexion (214) est accessible par la surface du substrat (201).

2. Procédé selon la revendication précédente, dans lequel l'étape de retrait d'une partie du matériau électriquement conducteur (219) comprend un procédé de gravure et/ou un procédé de planarisation mécanochimique.

3. Procédé selon l'une quelconque des revendications précédentes, dans lequel l'étape de formation d'une électrode biocompatible (230) comprend
le dépôt d'un matériau d'électrode (220) sur la surface du substrat (201) dans laquelle est formée l'encoche (218), et
l'application d'un procédé de planarisation mécanochimique pour former l'électrode biocompatible (230) et pour retirer le matériau d'électrode (220) en excès de la surface du substrat (201).

4. Procédé selon la revendication précédente, dans lequel le matériau biocompatible (220) comprend un métal noble.

5. Procédé selon l'une quelconque des revendications précédentes, dans lequel le plot de connexion (214) comprend un matériau choisi dans le groupe constitué par l'aluminium et le cuivre, et dans lequel le matériau électriquement conducteur (219) est choisi dans le groupe constitué par l'aluminium et le cuivre.

6. Procédé selon l'une quelconque des revendications précédentes, dans lequel
le substrat (201) comprend une autre tranchée (212) remplie avec le matériau électriquement conducteur (219),
une partie du matériau électriquement conducteur (219) est retirée de l'autre tranchée (212) de telle sorte qu'une autre encoche (218) est formée dans la surface du substrat (201), et
une autre électrode biocompatible (230) est formée dans l'autre encoche.
